(19) Europäisches Patentamt
European Patent Office
Office européen des brevets

(11) Publication number: 0 194 465 B1

(12) EUROPEAN PATENT SPECIFICATION

(45) Date of publication of patent specification: 19.12.90

(21) Application number: 86101909.9

(22) Date of filing: 14.02.86

(51) Int. Cl.[5]: C 10 M 169/04, C 08 L 71/02 // G11B5/72 ,(C10M169/04, 107:38, 147:04, C10N40:00)

# (54) Lubricating compositions having improved film-forming properties.

(30) Priority: 14.02.85 IT 1952585

(43) Date of publication of application: 17.09.86 Bulletin 86/38

(45) Publication of the grant of the patent: 19.12.90 Bulletin 90/51

(84) Designated Contracting States: BE CH DE FR GB IT LI NL SE

(56) References cited:
EP-A-0 165 649
EP-A-0 165 650
GB-A-1 104 482
US-A-3 214 478
US-A-3 242 218
US-A-3 665 041
US-A-3 715 378

(73) Proprietor: AUSIMONT S.r.l.
31, Foro Buonaparte
I-20100 Milano (IT)

(72) Inventor: Caporiccio, Gerardo
13, via E. Filiberto
I-20149 Milan (IT)
Inventor: Scarati, Mario Alberto
20, via Bronzino
I-20133 Milan (IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40 (DE)

EP 0 194 465 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to lubricating compositions which comprise perfluoropolyethers or fluoropolyethers and have improved film-forming properties.

Perfluoropolyethers having a viscosity of from 150 to 2000 $mm^2/s$ (at 20°C) are used as lubricants because of their good properties such as, for example, chemical and thermal resistance and their wetting and lubricating ability.

Said properties make it possible for perfluoropolyethers to also be employed in extremely thin films in the order of nm or tenths of nm as surface-protecting agents.

If perfluoropolyethers are used as lubricants for recording systems such as magnetic tapes or magnetic discs, they are usually applied starting from 1,1,2-trichlorotrifluoroethane solutions. This method of application does not permit high-quality, homogeneous and continuous films to be obtained which are essential to protect magnetic surfaces from surface wear and, thereby, maintain their storage capacity for a long period of time, not does it protect the reading heads. In fact, due to the way they operate, these recording systems face the risk of abrasion since the head rubs on the magnetic surface.

Various factors such as, e.g., rapid evaporation of the solvent utilized during the film deposition, influence the formation of non-homogeneous and non-continuous films.

Conventional methods employed to obtain thin films of perfluoropolyethers comprise, for instance, spraying onto the surface to be protected a solution of perfluoropolyether dissolved in suitable solvents or immersing the magnetic medium into said solution or spreading said solution on the disc by means of centrifugation. 1,1,2-trichlorotrifluoroethane is generally used as a solvent and, normally, solutions with a perfluoropolyether concentration below 10% by weight, preferably from 1 to 5% by weight, are employed.

After the solution has been applied, the surface is rubbed to evaporate the solvent and to homogenize the lubricating layer that has been deposited.

Furthermore, the mechanical stresses which the magnetic tapes are subjected to during winding-up or the centrifugal force which the discs are subjected to during operation tend to further reduce the film homogeneity and continuity since they cause lubricant migration with resulting thinning and breaking of the film.

It has now, surprisingly, been found that the drawbacks mentioned above can be overcome if the perfluoropolyether employed as a lubricant is admixed with a particular coadjuvant.

Thus, in accordance with the present invention, lubricating compositions having improved characteristics are provided which comprise:

A) a perfluoropolyether having a viscosity of from 150 to 2000 $mm^2/s$ (at 20°C);

B) a perfluoropolyether having a viscosity lower than or equal to 50 $mm^2/s$ (at 20°C);

the amount of compound B) being in the range of from 2 to 20% by weight with respect to the sum of A) and B).

Any perfluoropolyether or fluoropolyether of the classes A) and B) can be used for the purposes of the present invention provided that their viscosity is in the range indicated above.

Preferably, the perfluoropolyethers of type A) are selected from compounds which comprise the following repeating units:

A1) $(C_3F_6O)$ and $(CFXO)$ statistically distributed along the perfluoropolyether chain, wherein X is $-F$ or $-CF_3$;

A2) $(C_3F_6O)$;

A3) $(C_3F_6O)$, $(C_2F_4O)$, $(CFXO)$, statistically distributed along the perfluoropolyether chain, wherein X is $-F$ or $-CF_3$;

A4) $(C_2F_4O)$ and $(CF_2O)$, statistically distributed along the perfluoropolyether chain; or
$(C_2F_4O$ only.

The perfluoropolyethers of type B) are preferably selected from compounds which contain the following repeating units:

B1) $(C_3F_6O)$, $(CFXO)$, statistically distributed along the perfluoropolyether chain, wherein X is $-F$ or $-CF_3$;

B2) $(C_3F_6O)$;

B3) $(C_3F_6O)$; this class furthermore comprises the typical group $-CF(CF_3)-CF(CF_3)-$;

B4) $(C_2F_4O)$, $(CF_2O)$, statistically distributed along the perfluoropolyether chain; or from

B5) compounds having an oxetane ring of the general formulae:

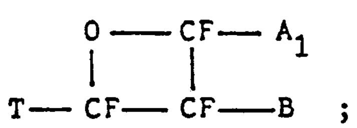 ;

(1)

(2)

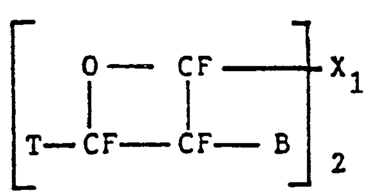 ;

in which at least one of the groups linked to the ring contains an ether oxygen atom; or an oxetane ring of the general formulae:

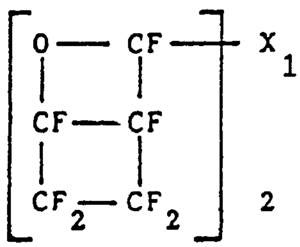 ;

(3)

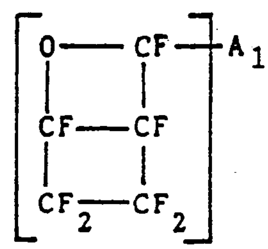 ;

(4)

in which the group linked to the ring contains at least an ether oxygen atom.

Preferably, compound B), used as a film-forming co-adjuvant is employed in an amount of from 5 to 10% by weight.

More preferably, the perfluoropolyethers of type A) are selected from those belonging to the following perfluoropolyether classes:

A1) $CF_3O(C_3F_6O)_m\ (CFXO)_n—CF_2X$

wherein X is —F or —$CF_3$; m and n are integers chosen in such a way that the viscosity of the compound is generally in the range indicated above for class A), the ratio m/n being in the range of from 5 to 40. These compounds may be prepared according to the process described in GB—A—1104482 and by subsequent neutralization as indicated in class B1) below.

A2) $C_3F_7O(C_3F_6O)_m—R_f$

wherein $R_f$ is —$C_2F_5$, —$C_3F_7$ or —$CFHCF_3$, and m is an integer chosen in such a way that the viscosity of the compound is in the range indicated above for class A). These compounds may be prepared in accordance with US—A—3242218 as specified in class B2) below; or $D(CF_2CF_2CF_2O)_nD_1$ in which D is F, $OCF_3$ or $OC_2F_5$; $D_1$ is $CF_3$, $C_2F_5$ or $C_3F_7$. These compounds may be prepared in accordance with EP—A—148 482.

A3) $CF_3O(C_3F_6O)_m\ (C_2F_4O)_n\ (CFXO)_q—CF_3$

wherein X is —F or —$CF_3$; m, n and q are integers chosen in such a way that a product having the viscosity indicated above for class A is obtained, the ratio

$$\frac{m}{n+q}$$

being in the range of from 0 to 50 and the ratio n/q being in the range of from 0 to 10.

These products are prepared by photo-oxidation of mixtures of $C_3F_6$ and $C_2F_4$ and subsequent neutralization with fluorine according to the process described in US—A—3 665 041.

A4) $CF_3O(C_2F_4O)_p\ (CF_2O)_q—CF_3$

where p and q are integers either identical or different from each other and chosen in such a way that the viscosity specified above for class A is obtained, the ratio p/q being within the range of from 0.5 to 1.5. These perfluoropolyethers may be prepared according to the process of US—A—3 715 378, and are subsequently neutralized with fluorine in accordance with US—A—3 665 041. The compounds wherein q = 0 are obtained according to US—A—4 523 039.

A5) I) $RO—(C_3F_6O)_m\ (CFXO)_n—CFX—L$, or
II) $R''CFXO—(C_3F_6O)_x\ (CFXO)_y—(C_2F_4O)_z—CFX—L$, where
R = —$CF_3$, —$C_2F_5$, —$C_3F_7$
X = —F, —$CF_3$
R'' = —F, —$CF_3$, —$C_2F_5$
m = an integer other than zero
n = an integer or zero whereby, when n is an integer, m/n ranges from 5 to 20 and R preferably is $CF_3$ and, when n is zero, R preferably is —$C_2F_5$ or —$C_3F_7$;
x = an integer or zero
y, z = integers, with

$$\frac{x+z}{y}$$

ranging from 5 to 0.5 provided that, when x is zero, z/y ranges from 1 to 0.5 and X is preferably —F and R'' = L

L = a group Y—Z, wherein

Y = $—CH_2O—$, $—CH_2OCH_2—$, $—CF_2—$, $—CF_2O—$

Z = an organic, non-aromatic, non-fluorinated radical, free from active hydrogen atoms, containing two or more identical or different heteroatoms, electron pair donors or an aromatic radical, which may or may not contain heteroatoms, capable of forming coordinative bonds or charge-transfer bonds, thus causing various kinds of adsorption phenomena on metal surfaces, polymer surfaces or surfaces of ceramic materials;

as described in IT—A—21480 A/84 and 21481 A/84. Other suitable compounds are described, e.g., in US—A—3 810 874.

The perfluoropolyethers of class A5) may be prepared according to the methods described in the above-mentioned IT—A—21480 A/84 and 21481 A/84 and the various indices specified above are selected in such a way that the viscosity indicated for class A) is obtained.

Suitable compounds of class A2) are also those comprising ($CH_2CF_2CF_2O$) units obtained according to EP—A—148 482.

The film-forming coadjuvants are perfluoropolyethers preferably selected from the following classes:

B1) $CF_3O(C_3F_6O)_m\ (CFXO)_n\ —A$,

wherein X is —F or $—CF_3$; A is $—CF_3$, $—CF_2H$ or $—CFH—CF_3$, the units ($C_3F_6O$) and (CFXO) being statistically distributed along the perfluoropolyether chain, m and n are integers chosen in such a way that the viscosity is within the range indicated for class B), the m/n ratio ranging from 5 to 40.

These perfluoropolyethers may be prepared by photo-oxidation or hexafluoropropene according to the process described in GB—A—1 104 482, and by subsequent neutralization with fluorine or by alkaline hydrolysis and decarboxylation at 150 to 200°C, starting from the precursor acylfluoride, according to GB—A—1 226 566;

B2) $C_3F_7O(C_3F_6O)_m—R_f$,

wherein $R_f$ may be $—C_2F_5$, $—C_3F_7$ or $—CFHCF_3$, and m is an integer chosen in such a way that the viscosity of the product is within the range indicated for class B).

These compounds may be prepared by ionic telomerization of hexafluoropropene epoxide and subsequent neutralization of the acid fluoride with fluorine or by alkaline hydrolysis and decarboxylation at 150 to 200°C of the telomer having an acylfluoride end group according to the processes described in US—A—3 242 218;

B3) $[C_3F_7O(C_3F_6O)_m\ —CF(CF_3)—]_2$

wherein m is an integer chosen in such a way that the viscosity of the product is within the range indicated for class B).

These compounds may be prepared by ionic telomerization of hexafluoropropene epoxide and subsequent photochemical dimerization of the acid fluoride according to the processes described in US—A—3 214 478.

B4)

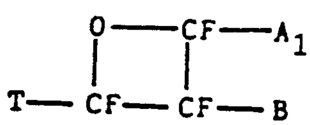 ;

(1)

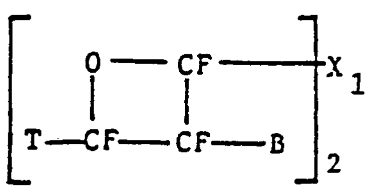 ;

(2)

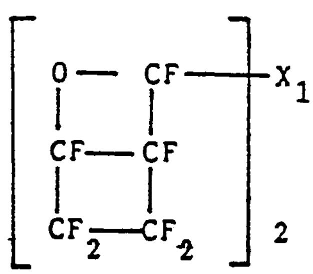 ;

(3)

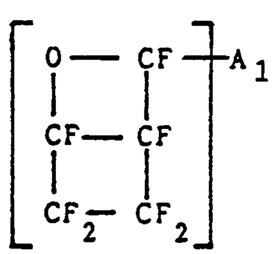 ;

(4)

wherein $A_1$ = F or a perfluoroalkyl radical $R_{f1}$ having 1 to 8 carbon atoms or a group $—OR_{f1}$ or a group

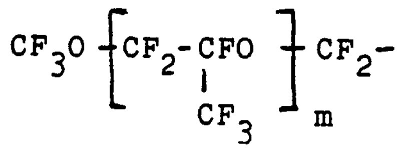

in which m is an integer of from 0 to 5, inclusive, or a group

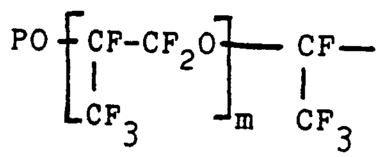

in which P is a perfluoroalkyl group having 1 to 8 carbon atoms and m is the same as defined above, B and T are either identical or different from each other and are F or a perfluoroalkyl group $R_{f1}$ having 1 to 7 carbon atoms or a group

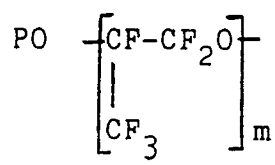

in which m and P are the same as defined above, $X_1$ is a group $—CF_2O—(CF_2O)_p—(C_2F_4O)_q—CF_2—$, in which p and q are identical or different from each other and are integers of from 0 to 5, inclusive, and where the sum p + q is at least 1, or a group $—(CF_2)_r—$ in which r is an integer of from 1 to 8.

These compounds are characterized in that at least one of groups $A_1$, B and T in class 1) or B, T, $X_1$ in class 2) contains one or more ether oxygen atoms, and in classes 3) and 4) groups $X_1$ and $A_1$ are selected from the above-mentioned radicals containing ether oxygen atoms; and, furthermore that, when one of radicals B or T is a group

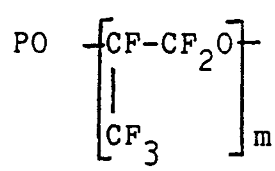

the other is F.

Said perfluoroethers are prepared by reactions based on the cyclo-addition of a fluoride of a perfluorinated acid and a perfluoroolefin, at least one of the compounds containing an ether oxygen atom as described in IT—A—19496 A/85.

B5) $CF_3O(C_2F_4O)_p(CF_2O)_q—CF_3$

wherein p and q are integers which are identical or different from each other and are chosen in such a way that the viscosity is within the range indicated for class B), the ratio p/q ranging from 0.5 to 1.5.

These compounds are obtained by photo-oxidation of tetrafluoroethylene according to US—A—3 715 378 and by subsequent neutralization with fluorine as described in US—A—3 665 041.

According to the present invention the best results are obtained when perfluoropolyethers of type A), having viscosity within the range of from 250 to 1500 $mm^2/s$ (at 20°C) and perfluoroethers of type B) having a viscosity of from 7 to 40 $mm^2/s$ (at 20°C) are used. The results obtained in accordance with the invention are all the more surprising since the coadjuvant of type B) generally does not possess sufficient lubricating properties and the viscosity of the mixtures is lower than that of the starting lubricant A) but it is always within the viscosity range of the perfluoropolyethers of type A) which, utilized as such, without coadjuvants, provide non-homogeneous and discontinuous films as mentioned above. It has been observed that the compositions of the invention provide films which, sometimes, last up to about ten years under the standard utilization conditions for the utilities mentioned herein.

As mentioned above, the compositions of the present invention may be used to form films on magnetic media. A preferred method consists of preparing a solution of said composition of 1 to 5% by weight, preferably 1 to 2% by weight, in 1,1,2-trichlorotrifluoroethane. The film can be formed, for example, by spraying the solution onto the surface to be coated or by immersing the latter in the solution, after which

the solution is evaporated at temperatures of from 20 to 30°C. Optionally, the surface is then subjected to rubbing or polishing by means of polyester gauze and/or cellulose fabric, or by rolling with rollers which are coated with such a fabric.

The resulting films are evaluated by determining the following properties:

spreading rate of a lubricant drop on a horizontal, smooth surface (horizontal spreading), or migration of a lubricant film on a vertical smooth surface (vertical spreading);

spreading area which is the area of the circle that forms at the interface between lubricant and substrate, and which is calculated from the measure of the horizontal spreading;

uniformity of the deposited lubricant film thickness which is determined by measurement of the film thickness and the standard deviation thereof.

The measurement methods are illustrated in examples 1 and 2, respectively.

The film-forming coadjuvants of the present invention, when employed in the lubricating composition for magnetic devices such as tapes and discs, result in thin, homogeneous and uniform films.

The films obtaining on a continuous surface generally have a thickness in the order of 2 to 100 nm, more particularly, 5 to 50 nm.

The composition of the present invention can also be used for the impregnation of magnetic cores (nuclei) of electromagnetic contactors. In this case, the use of the lubricant as an improving agent for the reed pack serves to reduce or, at any rate, dampen the vibrations of the metal armature and the contacts, and to limit or minimize the corrosion resulting from moisture penetration into the reed pack. The parameters measured for this utility are the wet area and the weight of absorbed lubricant. These are determined as described in example 3.

Another application of the compositions of the invention consists of the impregnation of porous metal bushes. Here it is essential that a quick impregnation under vacuum and good wettability with the lubricating fluid is accomplished in order to promote a spontaneous circulation of the oil under pressure. The measured parameters are the degree of impregnation and the life span of the bushes. These are determined as described in example 4.

The following examples serve to illustrate the invention without, however, limiting it.

### Example 1

Mixtures consisting of 90% by weight of a compound of class A) and 10% by weight of a compound of class B) were prepared.

The effect of film-forming coadjuvants B) on the spreading rate of the perfluoroether lubricants of class A) was determined by means of horizontal spreading measurements of the mixture prepared above. The measurements were carried out as follows: Droplets having a volume of 2 to 5 µl of the mixtures prepared as indicated above were spread on thin metal cobalt plates which had been lapped according to metallographic techniques. After 40 minutes the increase in the droplet diameter was observed under an optical, low-enlargement microscope equipped with a measure reticule. The values obtained are listed in table 1.

### Comparative Example 1

The spreading measurements of example 1 were repeated using some classes of lubricants A) as such. The data given in table 1 indicate an increase in both the spreading diameter and the spreading area in the tests carried out in the presence of the coadjuvant, compared with the tests carried out in the absence of the coadjuvant. This proves that the addition of film-forming coadjuvants improves the wetting properties of the lubricant and increases its spreading rate on the substrate.

TABLE 1

| Lubricating oil type A) | Coadjuvant type B) | Viscosity of the mixture $mm^2/s$ (at 20°C) | Spreading diameter after 40′ (mm) | Spreading area after 40′ ($cm^2$) |
|---|---|---|---|---|
| $CF_3O(C_3F_6O)_m(CF_2O)_nCF_3$<br>$\eta$ = 1500 $mm^2/s$ (at 20°C)<br>m/n = 30 | $CF_3O(C_3F_6O)_m(CF_2O)_nCF_3$<br>$\eta$ = 40 $mm^2/s$ (at 20°C)<br>m/n = 10 | 950 | 11,4 | 1,02 |
| " | $CF_3O(C_3F_6O)_m(CF_2O)_nCF_3$<br>$\eta$ = 15 $mm^2/s$ (at 20°C)<br>m/n = 10 | 870 | 13,0 | 1,33 |
| " | $CF_3O(C_3F_6O)_m(CF_2O)_nCF_3$<br>$\eta$ = 7 $mm^2/s$ (at 20°C)<br>m/n = 10 | 800 | 13,7 | 1,47 |
| " | — | 1.500 | 9.00 | 0,64 |
| $CF_3O(C_2F_4O)_p(CF_2O)_qCF_3$<br>$\eta$ = 250 $mm^2/s$ (at 20°C)<br>p/q = 0.7 | $C_3F_7O(C_3F_6O)_mC_2F_5$<br>$\eta$ = 15 $mm^2/s$ (at 20°C) | 180 | 12,7 | 1,27 |
| " | — | 250 | 10.0 | 0.79 |

Example 2

Mixtures were prepared which consisted of a compound of class A) and a compound of class B) as described in example 1.

The effect of coadjuvant B) on the uniformity of the thickness of the film of perfluoroether lubricants A) was determined by measuring the thickness of the film obtained on metallic discs with a Co—Ni magnetic layer, lubricated by immersion into solutions of 1% by weight of the mixture of lubricant A) and coadjuvant B), specified above, in 1,1,2-trichlorotrifluoroethane solvent.

After having been immersed in the solution, the discs were taken out at a speed of 0.5 cm/sec and, after being exposed for one hour under a hood in a dust-free environment, the film thickness was measured by means of infrared spectrometry with Fourier transformation in reflection on 60 equidistant selected points on 6 radical directions of the disc. The standard deviation was calculated on the basis of the thickness values thus measured. The results obtained are given in table 2.

Comparative Example 2

The same thickness measurements were carried out on some classes of lubricants A) as such and are given in table 2. The data obtained show that there is a difference in behaviour of the lubricants as such if compared with the mixtures in which the coadjuvant is present. The higher value of the standard deviation in the case of the thickness measurements carried out on coadjuvant-free mixtures shows that the addition of coadjuvants results in a better and more uniform distribution of the film on the metal substrate of the magnetic media.

TABLE 2

| Lubricating oil type A) | Coadjuvant type B) | Viscosity of the mixture $mm^2/s$ (at 20°C) | Standard deviation of examined thicknesses (± %) |
|---|---|---|---|
| $CF_3O(C_3F_6)_m(CF_2O)_nCF_3$<br>$\eta$ = 1.500 $mm^2/s$ (at 20°C)<br>m/n = 30 | $CF_3O(C_3F_6O)_m(CF_2O)_nCF_3$<br>$\eta$ = 40 $mm^2/s$ (at 20°C)<br>m/n = 10 | 950 | 11 |
| " | — | 1.500 | 24 |
| $CF_3(C_2F_4O)_p(CF_2O)_qCF_3$<br>$\eta$ = 250 $mm^2/s$ (at 20°C)<br>p/q = 0,7 | $CF_3O(C_3F_6O)_m(CF_2O)_nCF_3$<br>$\eta$ = 40 $mm^2/s$ (at 20°C)<br>m/n = 10 | 195 | 13 |
| " | — | 250 | 21 |
| $CF_3O(C_2F_4O)_q(CF_2O)_qCF_3$<br>$\eta$ = 600 $mm^2/s$ (at 20°C)<br>p/q = 0,7 | $C_3F_2O(C_3F_6O)_mC_2F_5$<br>$\eta$ = 40 $mm^2/s$ (at 20°C) | 500 | 12 |
| " | — | 600 | 26 |

Example 3

A reed pack of an electromagnetic contactor having the dimensions 110 × 160 mm and consisting of 50 reeds of a thickness of 0.3 mm was carefully cleaned and degreased with proper solvents and then was subjected to impregnation by immersing it in perfluoroether lubricants prepared according to the method described in example 1. The reed pack was immersed in the mixture of lubricant and coadjuvant for 10 minutes at a temperature of 40°C and then taken out and dried.

The degree of oil penetration into the interstices was determined by opening the reed pack and observing the wet area between the individual reeds in respect of the areas, if any, that remained dry and by weighing the total amount of oil retained in the reed pack. The results are given in table 3.

Comparative Example 3

The same measurements of wet area and weight of lubricant absorbed were carried out on some classes of lubricants A) as such and are reported in table 3.

The data show the difference in behaviour between the lubricant as such and the mixtures containing the coadjuvant. In fact, the percent increase in the wet area and the weight increase of absorbed lubricant in the presence of coadjuvants shows that the coadjuvants positively improve the ability of the lubricant to penentrate the reed interstices.

TABLE 3

| Lubricating oil type A) | Coadjuvant type B) | Viscosity of the mixture $mm^2/s$ (at 20°C) | % wet area | Absorbed oil weight (g) |
|---|---|---|---|---|
| $CF_3O(C_3F_6O)_m(CF_2O)_nCF_3$<br>$\eta$ = 1.500 $mm^2/s$ (at 20°C)<br>m/n = 30 | $CF_3O(C_3F_6O)_m(CF_2O)_nCF_3$<br>$\eta$ = 40 $mm^2/s$ (at 20°C)<br>m/n = 10 | 950 | 77 | 1,90 |
| " | — | 1.500 | 63 | 1,50 |
| $CF_3O(C_3F_6O)_m(CF_2O)_nCF_3$<br>$\eta$ = 250 $mm^2/s$ (at 20°C)<br>m/n = 30 | $CF_3O(C_3F_6O)_m(CF_2O)_nCF_3$<br>$\eta$ = 40 $mm^2/s$ (at 20°C)<br>m/n = 10 | 200 | 80 | 2,00 |
| " | $C_3F_7(C_3F_6O)_mC_2F_5$<br>$\eta$ = 7 $mm^2/s$ (at 20°C) | 170 | 89 | 2,30 |
| " | — | 250 | 70 | 1,73 |

Example 4

Porous bushes of sintered iron having an outside diameter of 17 mm and an inside diameter of 10 mm and a length of 17 mm were subjected to impregnation under vacuum by placing the bushes into a bath of lubricating oil which was thermo-regulated at 60°C and prepared as indicated in example 1. The bushes were removed after 1 minute, superficially dried and the weight of absorbed oil as well as the impregnation factor were measured, the impregnation factor being calculated as the ratio between the volume of the liquid actually absorbed and the sum of the volume of the bush micropores. The data given in table 4 are the average values of 10 samples of bushes.

The bushes were also subjected to a wear test by causing a steel shaft to rotate in them at 1500 rpm with a radial load of 280 N at 150°C. The life span, calculated on the basis of the number of revolutions that had taken place before wear was visible (such as acoustic emission, vibrations, visible clearance) was taken as an average of the impregnation quality. The results are given in table 4.

Comparative Example 4

The same impregnation factor and bush-life measurements were made on some classes of lubricants A) as such and the results are given in table 4.

The data obtained show the difference in behaviour between the lubricants as such and the mixtures in which the coadjuvant is used. In fact, the increase in impregnation factor and the increase in the life span of the bushes when coadjuvants are present prove that the coadjuvants positively improve the ability of the lubricant to penetrate the interstices of the bushes made of sintered iron material.

TABLE 4

| Lubricating oil type A) | Coadjuvant type B) | Viscosity of the mixture $mm^2/s$ (at 20°C) | Impregnation factor | Life of the bush (hours) |
|---|---|---|---|---|
| $CF_3O(C_3F_6O)_m(CF_2O)_nCF_3$ $\eta$ = 1.500 $mm^2/s$ (at 20°C) m/n = 30 | $CF_3O(C_3F_6O)_m(CF_2O)_nCF_3$ $\eta$ = 40 $mm^2/s$ (at 20°C) m/n = 10 | 950 | 0,91 | 50 |
| " | — | 1.500 | 0,65 | 40 |
| $CF_3O(C_3F_6O)_m(CF_2O)_nCF_3$ $\eta$ = 250 $mm^2/s$ (at 20°C) m/n = 30 | $CF_3O(C_3F_6O)_m(CF_2O)_nCF_3$ $\eta$ = 15 $mm^2/s$ (at 20°C) m/n = 10 | 180 | 0,87 | 56 |
| " | $\eta$ = 7 $mm^2/s$ (at 20°C) m/n = 10 | 170 | 0,88 | 52 |
| " | — | 250 | 0,70 | 40 |

**Claims**

1. Lubricating composition having film-forming properties comprising:

A) a perfluoropolyether having a viscosity of from 150 to 2000 $mm^2/s$ (cSt) (at 20°C);

B) a perfluoropolyether having a viscosity of lower than or equal to 50 $mm^2/s$ (cSt) (at 20°C);

the amount of compound B) being in the range of from 2 to 20% by weight with respect to the sum of A) and B).

2. Lubricating compositions according to claim 1, in which the perfluoropolyether of type A) is selected from perfluoropolyethers comprising repeating units of the following type:

A1) $(C_3F_6O)$ and (CFXO), statistically distributed along the perfluoropolyether chain, wherein X is —F or —$CF_3$;

A2) $(C_3F_6O)$;

A3) $(C_3F_6O)$, $(C_2F_4O)$, (CFXO), statistically distributed along the perfluoropolyether chain, wherein X is —F or —$CF_3$;

A4) $(C_2F_4O)$ and $(CF_2O)$, statistically distributed along the perfluoropolyether chain; or $(C_2F_4O)$ only;

and the perfluoropolyether of type B) is selected from compounds comprising repeating units of the following type:

B1) $(C_3F_6O)$, (CFXO), statistically distributed along the perfluoropolyether chain, wherein X is —F or —$CF_3$;

B2) $(C_3F_6O)$;

B3) $(C_3F_6O)$; this class furthermore comprises the typical group —$CF(CF_3)$—$CF(CF_3)$—;

B4) $(C_2F_4O)$, $(CF_2O)$, statistically distributed along the chain;

B5) or from compounds with an oxetane ring having the general formulae:

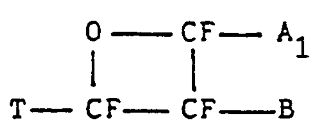 ;

(1)

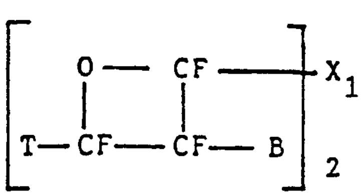 ;

(2)

in which at least one of the groups linked to the ring contains an ether oxygen atom;

or an oxetane ring having the general formulae:

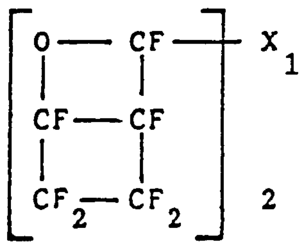;

(3)

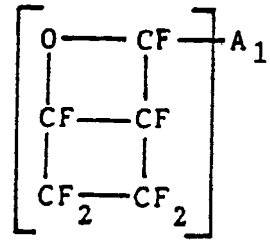;

(4)

in which the group linked to the ring contains at least an ether oxygen atom;

wherein $A_1$ = F or a perfluoroalkyl radical $R_{f1}$ having 1 to 8 carbon atoms or a group $—OR_{f1}$ or a group

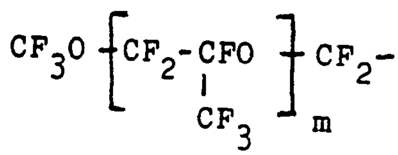

in which m is an integer of from 0 to 5, inclusive, or a group

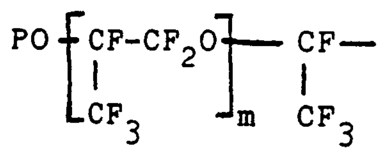

in which P is a perfluoroalkyl group having 1 to 8 carbon atoms and m is the same as defined above, B and T are either identical or different from each other and are F or a perfluoroalkyl group $R_{f1}$ having 1 to 7 carbon atoms or a group

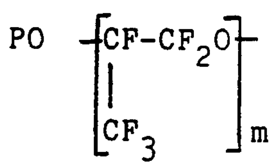

in which m and P are the same as defined above, $X_1$ is a group $—CF_2O—(CF_2O)_p—(C_2F_4O)_q—CF_2—$, in which p and q are identical or different from each other and are integers of from 0 to 5, inclusive, and where the sum p + q is at least 1, or a group $—(CF_2)_r—$ in which r is an integer of from 1 to 8.

3. Lubricating compositions according to claim 2 in which compound A) is selected from the following perfluoropolyethers:

A1) $CF_3O(C_3F_6O)_m(CFXO)_n—CF_2X$

wherein X is —F or $—CF_3$; m and n are integers and the ratio m/n ranges from 5 to 40, the units $(C_3F_6O)$ and (CFXO) being statistically distributed along the perfluoroether chain;

A2) $C_3F_7O(C_3F_6O)_m—R_f$

wherein $R_f$ is $—C_2F_5$, $—C_3F_7$ or $—CFHCF_3$, and m is an integer; or $D(CF_2CF_2CF_2O)_nD_1$, wherein D is F, $OCF_3$ or $OC_2F_5$ and $D_1$ is $CF_3$, $C_2F_5$ or $C_3F_7$;

A3) $CF_3O(C_3F_6O)_m(C_2F_4O)_n(CFXO)_q—CF_3$

wherein X is —F or $—CF_3$; m, n and q are integers, the ratio

$$\frac{m}{n+q}$$

ranges from 0 to 50 and n/q ranges from 0 to 10, the units $(C_3F_6O)$, $(C_2F_4O)$, (CFXO) being statistically distributed along the perfluoroether chain;

A4) $CF_3O(C_2F_4O)_p\,(CF_2O)_q—CF_3$

wherein p and q are integers which are equal or different from each other and the ratio p/q ranges from 0.5 to 1.5, the units ($C_2F_4O$) and ($CF_2O$) being statistically distributed along the perfluoroether chain;

A5) I) $RO—(C_3F_6O)_m—(CFXO)_n—CFX—L$, or
II) $R''CFXO—(C_3F_6O)_x(CFXO)_y—(C_2F_4O)_z—CFX—L$, wherein
$R = —CF_3, —C_2F_5$ or $—C_3F_7$
$X = —F$ or $—CF_3$
$R'' = —F, —CF_3$ or $—C_2F_5$
m = an integer other than zero
n = an integer or zero whereby, when n is an integer, m/n ranges from 5 to 20 and R is preferably $—CF_3$, and when n is zero, R is preferably $—C_2F_5$ or $—C_3F_7$;
x = an integer or zero
y, z = integers, whereby

$$\frac{x+z}{y}$$

ranges from 5 to 0.5 provided that, when x is zero, z/y ranges from 1 to 0.5 and X is preferably —F and R'' is L;
L = a group Y—Z, wherein
$Y = —CF_2O, —CH_2OCH_2—, —CF_2—, —CF_2O—$
Z = an organic non-aromatic, non-fluorinated radical free from active hydrogen atoms, containing two or more identical or different heteroatom electron pair donors or an aromatic radical which may or may not contain heteroatoms, capable of forming co-ordinative bonds or charge-transfer bonds and causing adsorption phenomena of various kinds on metal or polymer surfaces or surfaces of ceramic materials.

4. Lubricating compositions according to claim 2, in which compound B) is selected from the following perfluoroethers:

B1) $CF_3—O(C_3F_6O)_m(CFXO)_n—A$

wherein X is —F or $—CF_3$; A is $—CF_3$, $—CF_2H$ or $—CFH—CF_3$, the units ($C_3F_6O$) and (CFXO) being statistically distributed along the perfluoropolyether chain, m and n are integers and the ratio m/n ranges from 5 to 40;

B2) $C_3F_7O(C_3F_6O)_m—R_f$

wherein $R_f$ is $—C_2F_5$, $—C_3F_7$ or $—CFHCF_3$ and m is an integer;

B3) $[C_3F_7O)C_3F_6O)_m—CF(CF_3)]_2$

wherein m is an integer;

B4) $CF_3O(C_2F_4O)_p\,(CF_2O)_q—CF_3$

wherein p and q are integers which are identical or different from each other and the ratio p/q ranges from 0.5 to 1.5;

B5)

(1) 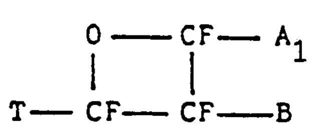 ;

(2) 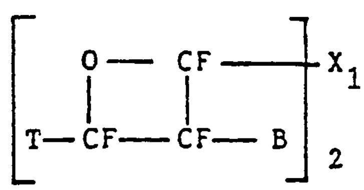 ;

(3) 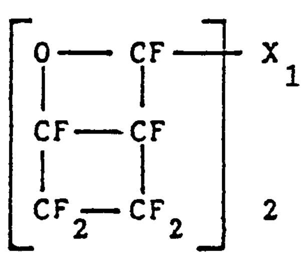 ;

(4) 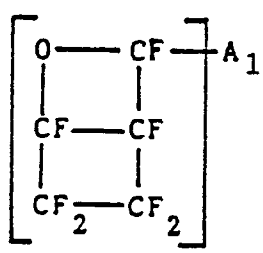 ;

wherein $A_1$ is F, a perfluoroalkyl group $R_{f1}$ having 1 to 8 carbon atoms, a group $-OR_{f1}$, or a group

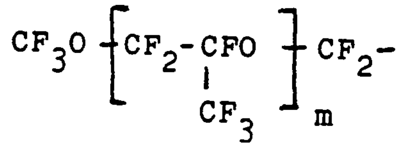

in which m is an integer of from 0 to 5 inclusive, or a group

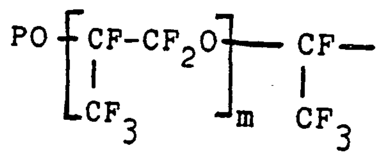

in which P is a perfluoroalkyl group having 1 to 8 carbon atoms and m is as defined above; B and T are identical or different from each other and are F, a perfluoroalkyl group having 1 to 7 carbon atoms, or a group

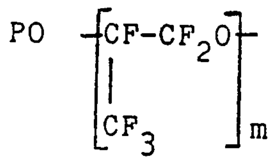

in which m and P are as defined above; $X_1$ is a group $-CF_2O-(CF_2O)_p-(C_2F_4O)_q-CF_2$, in which p and q are identical or different from each other and are integers of from 0 to 5 inclusive and the sum p + q is at least 1, or a group $-(CF_2)_r-$, in which r is an integer of from 1 to 8,

at least one of groups $A_1$, B, T in class 1) or B, T, $X_1$ in class 2) contains one or more ether oxygen atoms and the groups $X_1$ and $A_1$ in classes 3) and 4) are selected from the above-mentioned radicals containing ether oxygen atoms; and with the additional proviso that, when one of radicals B or T is a group

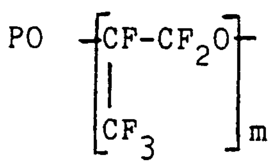

the other is F.

5. Lubricating compositions according to any of claims 1 to 4, in which the amounts of component B) is within the range of from 5 to 10% by weight.

6. Lubricating composition according to any one of claims 1 to 5, in which compounds A) has a viscosity of from 250 to 1500 $mm^2/s$ (at 20°C).

7. Lubricating compositions according to any one of claims 1 to 6, in which compound B has a viscosity of from 7 to 40 $mm^2/s$ (at 20°C).

**Patentansprüche**

1. Schmiermittelzusammensetzung mit filmbildenden Eigenschaften, umfassend

A) einen Perfluorpolyether mit einer Viskosität von 150 bis 2000 $mm^2/s$ (cSt) (bei 20°C);

B) einen Perfluorpolyether mit einer Viskosität von weniger als oder gleich 50 $mm^2/s$ (cSt) (bei 20°C);

wobei die Menge an Verbindung B) in Bezug auf die Summe von A) und B) im Bereich von 2 bis 20 Gewichtsprozent liegt.

2. Schmiermittelzusammensetzung nach Anspruch 1, worin der Perfluorpolyether vom Typ A) ausgewählt ist aus Perfluorpolyethern, die sich wiederholende Einheiten des folgenden Typs enthalten:

A1) $(C_3F_6O)$ und (CFXO), statistisch entlang der Perfluorpolyetherkette verteilt, wobei X —F oder $-CF_3$ ist;

A2) $(C_3F_6O)$;

A3) $(C_3F_6O)$, $(C_2F_4O)$, (CFXO), statistisch entlang der Perfluorpolyetherkette verteilt, worin X —F oder $-CF_3$ ist;

A4) $(C_2F_4O)$ und $(CF_2O)$, statistisch entlang der Perfluorpolyetherkette verteilt; oder nur $(C_2F_4O)$;

und der Perfluorpolyether vom Typ B) ausgewählt ist aus Verbindungen, die sich wiederholende Einheiten des folgenden Typs enthalten:

B1) $(C_3F_6O)$, (CFXO), statistisch entlang der Perfluorpolyetherkette verteilt, worin X —F oder $-CF_3$ darstellt;

B2) $(C_3F_6O)$;
B3) $(C_3F_6O)$; diese Klasse enthält ferner die typische Gruppe $—CF(CF_3)—CF(CF_3)—$;
B4) $(C_2F_4O)$, $(CF_2O)$, statistisch entlang der Kette verteilt;
B5) oder aus Verbindungen mit einem Oxetanring der allgemeinen Formeln:

(1) 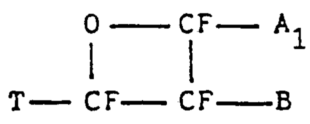 ; (2) 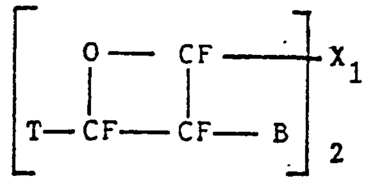 ;

worin mindestens eine der mit dem Ring verknüpften Gruppen ein Ethersauerstoffatom enthält; oder einem Oxetanring der allgemeinen Formeln;

(3) 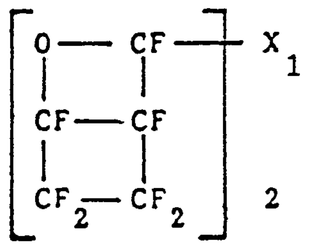 ; (4) 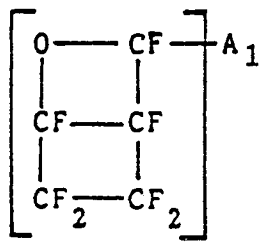 ;

worin die mit dem Ring verknüpfte Gruppe mindestens ein Ethersauerstoffatom enthält; wobei $A_1$ = F oder ein Perfluoralkylrest $R_{f1}$ mit 1 bis 8 Kohlenstoffatomen oder eine Gruppe $—OR_{f1}$ oder eine Gruppe

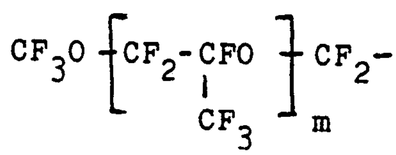

in der m eine ganze Zahl von 0 bis 5 einschließlich ist, oder eine Gruppe

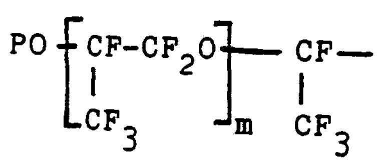

in der P eine Perfluoralkylgruppe mit 1 bis 8 Kohlenstoffatomen ist und m wie oben definiert ist, B und T entweder identisch oder verschieden voneinander sind und F oder eine Perfluoralkylgruppe $R_{f1}$ mit 1 bis 7 Kohlenstoffatomen darstellen oder eine Gruppe

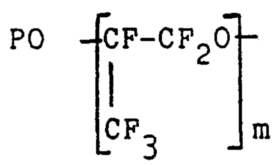

in der m und P wie oben definiert sind, $X_1$ eine Gruppe $—CF_2O—(CF_2O)_p—(C_2F_4O)_q—CF_2—$, ist, in der p und q identisch oder verschieden voneinander sind und ganze Zahlen von 0 bis 5 einschließlich sind, und worin die Summe p + q mindestens 1 ist, oder eine Gruppe $—(CF_2)_r—$, in der r eine ganze Zahl von 1 bis 8 ist.

3. Schmiermittelzusammensetzung nach Anspruch 2, worin Verbindung A) aus den folgenden Perfluorpolyethern ausgewählt ist:

A1) $CF_3O(C_3F_6O)_m(CFXO)_n—CF_2X$

worin X —F oder $—CF_3$ ist; m und n ganze Zahlen sind und das Verhältnis m/n von 5 bis 40 reicht, die Einheiten $(C_3F_6O)$ und $(CFXO)$ statistisch entlang der Perfluoretherkette verteilt sind;

A2) $C_3F_7O(C_3F_6O)_m—R_f$

worin $R_f$ $—C_2F_5$, $—C_3F_7$ oder $—CFHCF_3$ ist und m eine ganze Zahl ist; oder $D(CF_2CF_2CF_2O)_nD_1$, worin D F, $OCF_3$ oder $OC_2F_5$ und $D_1$ $CF_3$, $C_2F_5$ oder $C_3F_7$ darstellt;

A3) $CF_3O(C_3F_6O)_m\ (C_2F_4O)_n\ (CFXO)_q\ —CF_3$,
worin X —F oder $—CF_3$ bedeutet; m, n und q ganze Zahlen sind; das Verhältnis

$$\frac{m}{n+q}$$

von 0 bis 50 und n/q von 0 bis 10 reicht, wobei die Einheiten $(C_3F_6O)$, $(C_2F_4O)$, (CFXO) statistisch entlang der Perfluoretherkette verteilt sind;

A4) $CF_3(C_2F_4O)_p\ (CF_2O)_q\ —CF_3$

worin p und q ganze Zahlen sind, die gleich oder verschieden voneinander sind, und das Verhältnis p/q von 0,5 bis 1,5 reicht, wobei die Einheiten $(C_2F_4O)$ und $(CF_2O)$ statistisch entlang der Perfluoretherkette verteilt sind;

A5) I) $RO—(C_3F_6O)_m—(CFXO)_n—CFX—L$ oder
II) $R''CFXO(C_3F_6O)_x(CFXO)_y(C_2F_4O)_z—CFX—L$, worin
R = $—CF_3$, $—C_2F_5$ oder $—C_3F_7$
X = —F oder $CF_3$
R'' = —F, $—CF_3$ oder $—C_2F_5$
m = eine ganze Zahl außer 0
n = eine ganze Zahl oder 0, wobei, wenn n eine ganze Zahl ist, das Verhältnis m/n von 5 bis 20 reicht und R vorzugsweise $—CF_3$ ist, und wenn n gleich 0 ist, R vorzugsweise $—C_2F_5$ oder $—C_3F_7$ bedeutet;
x = eine ganze Zahl oder 0
y, z = ganze Zahlen, wobei

$$\frac{x+z}{y}$$

von 5 bis 0,5 reicht, vorausgesetzt daß, wenn x 0 ist, z/y von 1 bis 0,5 reicht und X vorzugsweise —F und R'' L ist;
L = eine Gruppe Y—Z worin
Y = $—CH_2O$, $—CH_2OCH_2—$, $—CF_2—$ oder $—CF_2O—$
Z = ein organischer, nicht-aromatischer, nicht-fluorierter Rest, frei von aktiven Wasserstoffatomen, der 2 oder mehr identische oder verschiedene Heteroatome als Elektronenpaardonoren enthält oder ein aromatischer Rest, der gegebenenfalls Heteroatome enthalten kann, die imstande sind, koordinative Bindungen oder Charge-Transfer-Bindungen auszubilden und Adsorptionsphänomene verschiedener Art auf Metall- oder Polymeroberflächen oder Oberflächen von keramischen Materialien zu verursachen.

4. Schmiermittelzusammensetzung nach Anspruch 2, worin Verbindung B ausgewählt ist aus den folgenden Perfluorethern:

B1) $CF_3—O(C_3F_6O)_m(CFXO)_n—A$

worin X —F oder $—CF_3$ ist; A $—CF_3$, $—CF_2H$ oder $—CFH—CF_3$ ist, wobei die Einheiten $(C_3F_6O)$ und (CFXO) statistisch entlang der Perfluorpolyetherkette verteilt sind, m und n ganze Zahlen sind und das Verhältnis m/n von 5 bis 40 reicht;

B2) $C_3F_7O(C_3F_6O)_m—R_f$

worin $R_f$ $—C_2F_5$, $—C_3F_7$ oder $—CFHCF_3$ ist und m eine ganze Zahl ist;

B3) $[C_3F_7O(C_3F_6O)_m—CF(CF_3)]_2$

worin m eine ganze Zahl ist;

B4) $CF_3(C_2F_4O)_p\ (CF_2O)_q—CF_3$

worin p und q ganze Zahlen sind, die identisch oder verschieden sind, und das Verhältnis p/q von 0,5 bis 1,5 reicht;

B5)

(1) 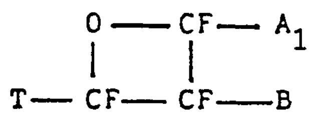 ;

(2) 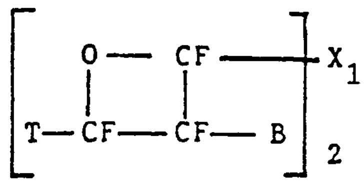 ;

(3) 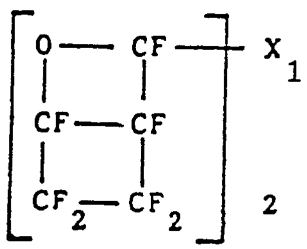 ;

(4) 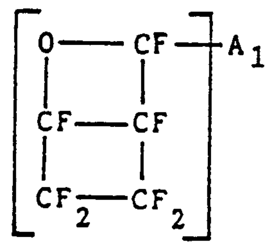 ;

worin $A_1$ F ist, eine Perfluoralkylgruppe $R_{f1}$ mit 1 bis 8 Kohlenstoffatomen, eine Gruppe $-OR_{f1}$, oder eine Gruppe

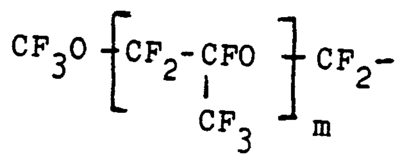

in der m eine ganze Zahl von 0 bis einschließlich 5 ist, oder eine Gruppe

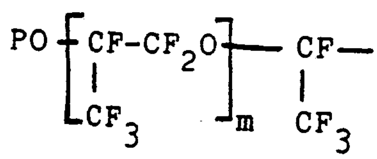

in der P eine Perfluoralkylgruppe mit 1 bis 8 Kohlenstoffatomen ist und m wie oben definiert ist;

B und T sind identisch oder verschieden voneinander, und F, eine Perfluoralkylgruppe mit 1 bis 7 Kohlenstoffatomen oder eine Gruppe

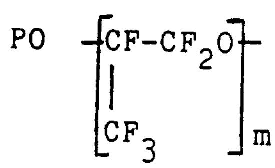

in der m und P wie oben definiert sind; $X_1$ ist eine Gruppe $-CF_2O-(CF_2O)_p-(C_2F_4O)_q-CF_2$, in der p und q identisch sind oder verschieden voneinander und ganze Zahlen von 0 bis 5 einschließlich sind und die Summe p + q mindestens 1 beträgt, oder eine Gruppe $-(CF_2)_r-$, in der r eine ganze Zahl von 1 bis 8 ist, mindestens eine der Gruppen $A_1$, B, T in Klasse 1) oder B, T, $X_1$ in Klasse 2) eine oder mehr Ethersaurestoffatome enthält, und die Gruppen $X_1$ und $A_1$ in den Klassen 3) und 4) aus den oben genannten Resten, die Sauerstoffatome enthalten, ausgewählt sind; mit der zusätzlichen Maßgabe daß, wenn einer der Reste B oder T eine Gruppe

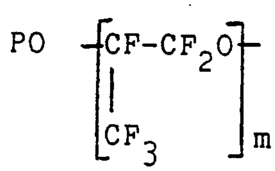

darstellt, der andere F ist.

5. Schmiermittelzusammensetzung nach einem der Ansprüche 1 bis 4, worin die Menge an Verbindung B) innerhalb des Bereiches von 5 bis 10 Gewichtprozent liegt.

6. Schmiermittelzusammensetzung nach einem der Ansprüche 1 bis 5, worin die Verbindung A) eine Viskosität von 250 bis 1500 $mm^2/s$ (bei 20°C) hat.

7. Schmiermittelzusammensetzung nach einem der Ansprüche 1 bis 6, worin die Verbindung B) eine Viskosität von 7 bis 40 $mm^2/s$ (bei 20°C) hat.

**Revendications**

1. Compositions de lubrification ayant des caractéristiques améliorées, caractérisées en ce qu'elles comprennent:

A) un perfluoropolyéther ayant une viscosité de 150 à 2000 $mm^2/s$ (cSt) à 20°C;

B) un perfluoropolyéther ayant une viscosité inférieure ou égale à 50 $mm^2/s$ (cSt) à 20°C;

la quantité du composé B) étant de l'ordre de 2 à 20% en poids par rapport à la somme des composés A) et B).

2. Compositions de lubrification suivant la revendication 1, caractérisées en ce que le perfluoropolyéther du type A) est choisi parmi des perfluoropolyéthers comprenant les unités répétées suivantes:

A1) ($C_3F_6O$) et (CFXO) distribuées statistiquement le long de la chaîne perfluoropolyéther, dans lesquelles X est —F ou —$CF_3$;

A2) ($C_3F_6O$);

A3) ($C_3F_6O$), ($C_2F_4O$), (CFXO) distribuées statistiquement le long de la chaîne perfluoropolyéther, où X est —F ou —$CF_3$;

A4) ($C_2F_4O$) et ($CF_2O$) distribuées statistiquement le long de la chaîne perfluoropolyéther; ou ($C_2F_4O$) uniquement;

et que le perfluoropolyéther de type B) est choisi parmi des composés comprenant les unités répétées suivantes:

B1) ($C_3F_6O$) et (CFXO), distribuées statistiquement le long de la chaîne perfluoropolyéther, dans lesquelles X est —F ou —$CF_3$;

B2) ($C_3F_6O$);

B3) ($C_3F_6O$); cette classe comprend de plus le groupe typique —$CF(CF_3)$—$CF(CF_3)$—;

B4) ($C_2F_4O$) et ($CF_2O$) distribuées statistiquement le long de la chaîne perfluoropolyéther;

B5) ou parmi des composées ayant un noyau oxétane représenté par les formules générales:

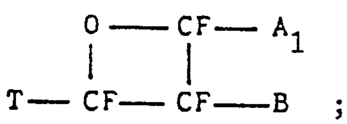
;
(1)

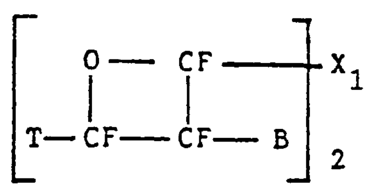
;
(2)

dans lesquelles l'un moins des groupes liés au noyau contient un atome d'oxygène de type éther;

ou un noyau oxétane représenté par les formules générales:

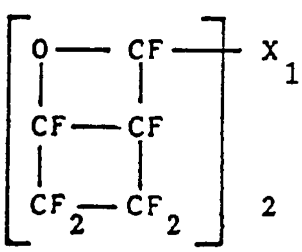
;
(3)

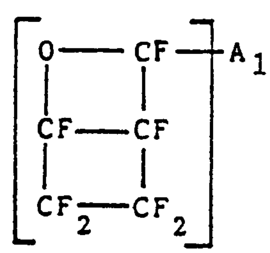
;
(4)

dans lesquelles le groupe lié au noyau contient au moins un atome d'oxygène de type éther;

ou $A_1$ est —F ou un radical perfluoroalkyle —$R_{f1}$ ayant 1 à 8 atomes de carbone, ou un groupe —$OR_{f1}$ ou un groupe

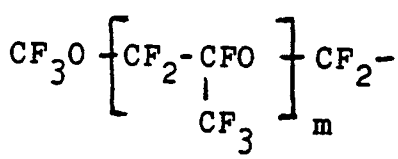

dans lequel m est un entier de 0 à 5 inclus, ou un groupe

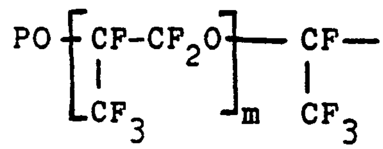

dans lequel P est un groupe perfluoroalkyle ayant 1 à 8 atomes de carbone et m est tel que défini plus haut, B et T sont identiques ou différents et sont chacun —F ou un groupe perfluoroalkyle —$R_{f1}$ ayant 1 à 7 atomes de carbone ou un groupe

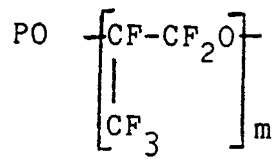

dans lequel m et P sont tels que définis plus haut, $X_1$ est un groupe $—CF_2O—(CF_2O)_p—(C_2F_4O)_q—CF_2—$, dans lequel p et q sont identiques ou différents et sont des entiers de 0 à 5 inclus, et où la somme p + q égale à au moins 1, ou un groupe $—(CF_2)_r—$ dans lequel r est un entier de 1 à 8.

3. Compositions de lubrification suivant la revendication 2, caractérisées en ce que le composé A) est choisi parmi les perfluoropolyéthers suivants:

A1) $CF_3O(C_3F_6O)_m(CFXO)_n—CF_2X$

dans lequel X est —F ou $CF_3$; m et n sont des entiers et le rapport m/n est de l'ordre de 5 à 40, les unités ($C_3F_6O$) et (CFXO) étant distribuées statistiquement sur la chaîne perfluoroéther;

A2) $C_3F_7O(C_3F_6O)_m—R_f$

dans lequel $R_f$ est $—C_2F_5$, $—C_3F_7$ ou $—CFHCF_3$, et m est un entier; ou bien $D(CF_2CF_2CF_2O)_nD_1$ dans lequel D est —F, $—OCF_3$ ou $—OC_2F_5$ et $D_1$ est $—CF_3$, $—C_2F_5$ ou $—C_3F_7$;

A3) $CF_3O(C_3F_6O)_m(C_2F_4O)_n(CFXO)_q—CF_3$

dans lequel X est —F ou $CF_3$; m, n et q sont des entiers, le rapport m/(n + p) est de l'ordre de 0 à 50 et le rapport n/q est de l'ordre de 0 à 10, les unités ($C_3F_6O$), ($C_2F_4O$) et (CFXO) étant distribuées statistiquement sur la chaîne perfluoroéther;

A4) $CF_3O(C_2F_4O)_p(CF_2O)_q—CF_3$

dans lequel p et q sont des entiers et le rapport p/q est de l'ordre de 0,5 à 1,5 les unités ($C_2F_4O$) et ($CF_2O$) étant distribuées statistiquement sur la chaîne perfluoroéther;

A5) I) $RO—(C_3F_6O)_m(CFXO)_n—CFX—L$ ou
II) $R''CFXO—(C_3F_6O)_x(CFXO)_y—(C_2F_4O)_z—CFX—L$, où
R est $—CF_3$, $—C_2F_5$, $—C_3F_7$
X est —F, $—CF_3$
R'' est —F, $CF_3$, $—C_2F_5$
m est un entier autre que zéro
n est un entier ou zéro; lorsque n est un entier, m/n est compris entre 5 et 20 et R est de préférence $—CF_3$ et, lorsque n est égal à zéro, R est de préférence $—C_2F_5$ ou $—C_3F_7$;
x est un entier ou zéro
y, z sont des entiers, le rapport (x + z) étant de l'ordre de 5 à 0,5 à condition que, lorsque x est égal à zéro, le rapport z/y soit de l'ordre de 1 à 0,5 et X est de préférence —F et R'' est L;
L est un groupe Y—Z dans lequel
Y est $—CH_2O—$, $—CH_2OCH_2—$, $—CF_2—$ ou $—CF_2O—$
Z est un radical organique, non aromatique, non fluoré, dépourvu d'atome d'hydrogène actif, contenant deux ou plusieurs hétéroatomes identiques ou différents, donneurs de paire d'électrons ou bien un radical aromatique, qui peut ou non contenir des hétéroatomes, pouvant former des liaisons de coordination ou des liaisons de transfert de charge et provoquer diverses sortes de phénomènes d'adsorption sur des surfaces métalliques, des surfaces de polymères ou des surfaces de matériaux céramiques.

4. Compositions de lubrification suivant la revendication 2, caractérisées en ce que le composé B) est choisi parmi les perfluoropolyéthers suivants:

B1) $CF_3O(C_3F_6O)_m(CFXO)_n—A$,

où X est $—F$ ou $—CF_3$; A est $—CF_3$, $—CF_2H$ ou $—CFH—CF_3$, les unités ($C_3F_6O$) et (CFXO) étant distribuées statistiquement le long de la chaîne perfluoropolyéther, m et n sont des entiers et le raport m/n est de l'ordre de 5 à 40;

B2) $C_3F_7O(C_3F_6O)_m—R_f$

où $R_f$ peut être $—C_2F_5$, $—C_3F_7$ ou $—CFHCF_3$, et m est un entier;

B3) $[C_3F_7O(C_3F_6O)_m—CF(CF_3)—]_2$

où m est un entier;

B4) $CF_3O(C_2F_4O)_p—CF_3$

où p et q sont des entiers identiques ou différents et le rapport p/q est de l'ordre de 0,5 à 1,5;

B5)

(1) 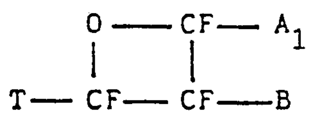 ;

(2) 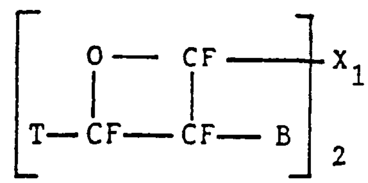 ;

(3) 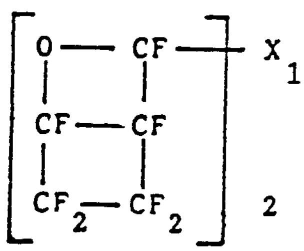 ;

(4) 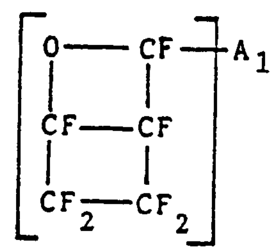 ;

où $A_1$ est $—F$ ou un radical perfluoroalkyle $—R_{f1}$ ayant 1 à 8 atomes de carbone, ou un groupe $—OR_{f1}$ ou un groupe

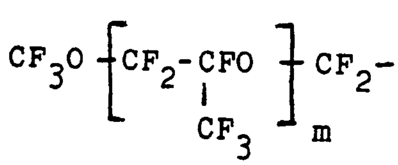

dans lequel m est un entier de 0 à 5 inclus, ou un groupe

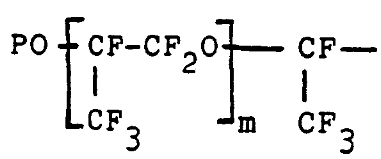

dans lequel P est un groupe perfluoroalkyle ayant 1 à 8 atomes de carbone et m est tel que défini plus haut,

B et T sont identiques ou différents et sont chacun —F ou un groupe perfluoroalkyle —$R_{f1}$ ayant 1 à 7 atomes de carbone, ou un groupe

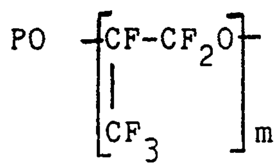

dans lequel m et P sont tels que définis plus haut, $X_1$ est un groupe —$CF_2O$—$(CF_2O)_p$—$(C_2F_4O)_q$—$CF_2$—, dans lequel p et q sont identiques ou différents et sont des entiers de 0 à 5 inclus, et où somme p + q est égale à au moins 1, ou un groupe —$(CF_2)_r$— dans lequel r est un entier de 1 à 8, au moins l'un des groupes $A_1$, B et T dans la classe 1 ou B, T, $X_1$ dans la classe 2, contient un ou plusieurs atomes d'oxygène de type éther, et dans les classes 3) et 4), les groupes $X_1$ et $A_1$ sont choisis parmi les radicaux cités plus haut contenant des atomes d'oxygène de type éther; avec la condition supplémentaire selon laquelle, lorsque l'un des radicaux B ou T est un groupe

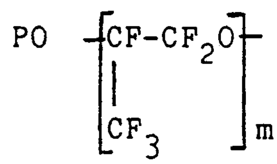

l'autre est —F.

5. Compositions de lubrification suivant l'une quelconque des revendications 1 à 4, caractérisées en ce que la quantité de composant B) est de l'ordre de 5 à 10% en poids.

6. Compositions de lubrification suivant l'une quelconque des revendications 1 à 5, caractérisées en ce que le composant A) a une viscosité comprise entre 250 et 1500 $mm^2/s$ à 20°C.

7. Compositions de lubrification suivant l'une quelconque des revendications 1 à 6, caractérisées en ce que le composant B) a une viscosité comprise entre 7 et 40 $mm^2/s$ à 20°C.